# EUROPÄISCHE PATENTSCHRIFT

(11) **EP 1 144 209 B1**
(45) Veröffentlichungstag und Bekanntmachung des Hinweises auf die Patenterteilung: **08.01.2003**
(21) Anmeldenummer: 99924689.5
(22) Anmeldetag: 19.03.1999
(51) Int. Cl.: B60C 27/10

(54) **GLEITSCHUTZVORRICHTUNG**
ANTI-SKID DEVICE
DISPOSITIF DE PROTECTION CONTRE LES DERAPAGES

(30) Priorität: 20.03.1998 DE 19813829
(43) Veröffentlichungstag der Anmeldung: 17.10.2001
(73) Patentinhaber: RUD-KETTENFABRIK RIEGER & DIETZ GMBH U. CO., 73432 Aalen-Unterkochen (DE)
(72) Erfinder: DEGER, Werner, D-73466 Lauchheim (DE); KAISER, Helmut, D-73432 Aalen-Unterkochen (DE); SCHAFFERT, Thilo, Ernst, D-74423 Obersontheim (DE); LIESCH, Eugen, D-73432 Aalen-Unterkochen (DE)
(74) Vertreter: Böning, Manfred, Prof.Dr.-Ing.
(86) Internationale Anmeldenummer: DE9900914
(87) Internationale Veröffentlichungsnummer: WO99047371

(56) Entgegenhaltungen:
- DE-C- 19 702 815
- US-A- 1 786 229
- US-A- 2 925 113

## Beschreibung

Die Erfindung betrifft eine Gleitschutzvorrichtung mit einem Laufnetz, das über Anschlußorgane an mehreren Anschlußstellen mit einer inneren und einer äußeren Halterung verbunden ist, und mit einem zum Verkürzen des Umfangs der inneren Halterung dienenden Spannstrang, der von der inneren Halterung zur äußeren Halterung verläuft.

Eine gattungsgemäße Gleitschutzvorrichtung der vorstehenden Art ist aus der DE 42 25 802 C2 bekannt. Bei der bekannten Gleitschutzvorrichtung wird die äußere Halterung von einer geschlossenen Seitenkette gebildet, die mit Führungsösen für den Spannstrang versehen ist, dessen Ende einen Haken aufweist, der in ein Glied der Seitenkette einhängbar ist. Mit der äußeren Halterung ist nicht nur das Laufnetz der Gleitschutzvorrichtung, sondern über Anschlußelemente auch eine zum Schutz der Felge des Fahrzeugrads dienende, zwischen der Flanke des Reifens und der äußeren Halterung sowie dem Spannstrang zu liegen kommende ringförmige Scheibe verbunden.

Während bei der zuvor genannten bekannten Gleitschutzvorrichtung die Scheibe lösbar mit der äußeren Halterung verbunden ist, bildet sie bei einer in der nicht vorveröffentlichten älteren Anmeldung 197 02 815.2-16 (vgl. DE 197 02 815 C1) offenbarten Gleitschutzvorrichtung zusammen mit einem Verwahrring selbst die äußere Halterung. Der Verwahrring wird dabei von einer Spule gebildet, die über speichenartige Stege fest mit der ringförmigen Scheibe verbunden ist, an deren äußerem Rand die Anschlußorgane für das Laufnetz angreifen. Die ältere Lösung bietet neben dem Vorteil einer flachen Bauweise ebenfalls einer die Gefahr von Beschädigungen der Fahrzeugfelge eliminierenden Unterbringungsmöglichkeit des Spannstrangendes. Wenn sie gleichwohl nicht voll zu befriedigen vermag, so liegt der Grund hierfür darin, daß ein zur Erhöhung der Laufleistung der Gleitschutzvorrichtung erwünschtes Wenden des Laufnetzes bei ihr praktisch nicht möglich ist.

Der Erfindung liegt die Aufgabe zugrunde, dem aufgezeigten Mangel abzuhelfen und eine Gleitschutzvorrichtung mit einer von einer Scheibe und einem Verwahrring gebildeten äußeren Halterung zu schaffen, die ein Wenden des Laufnetzes ermöglicht, ohne daß dessen Anschlußorgane von der äußeren Halterung getrennt werden müssen. Diese Aufgabe wird erfindungsgemäß dadurch gelöst, daß die äußere Halterung eine Scheibe und einen Verwahrring für das Ende des Spannstrangs aufweist und daß der Verwahrring lösbar mit der Scheibe verbunden ist. Um bei der erfindungsgemäßen Gleitschutzvorrichtung das Laufnetz zu wenden, braucht der Benutzer der Vorrichtung den Verwahrring lediglich von der einen Seitenfläche der Scheibe zu lösen und ihn an der anderen Seitenfläche der Scheibe wieder zu befestigen.

Weitere Einzelheiten und Merkmale der Erfindung ergeben sich aus den Unteransprüchen und der nachstehenden Beschreibung einer in der beigefügten Zeichnung dargestellten, besonders vorteilhaften Ausführungsform der Erfindung. Es zeigen:
- Fig. 1: die perspektivische Ansicht einer auf einen Fahrzeugreifen aufgezogenen Gleitschutzvorrichtung,
- Fig. 2: die Vorderansicht einer einen Teil der äußeren Halterung bildenden Scheibe,
- Fig. 3: die Vorderansicht eines einen weiteren Teil der äußeren Halterung bildenden Verwahrrings,
- Fig. 4: eine Einzelheit der Fig. 3 in vergrößerter und perspektivischer Darstellung,
- Fig. 5: schräg von hinten betrachtet, die miteinander verbundenen Teile der Figuren 2 und 3,
- Fig. 6: eine Seitenansicht der miteinander verbundenen Teile gemäß Fig. 5, und
- Fig. 7: die Vorderansicht einer leicht modifizierten äußeren Halterung.

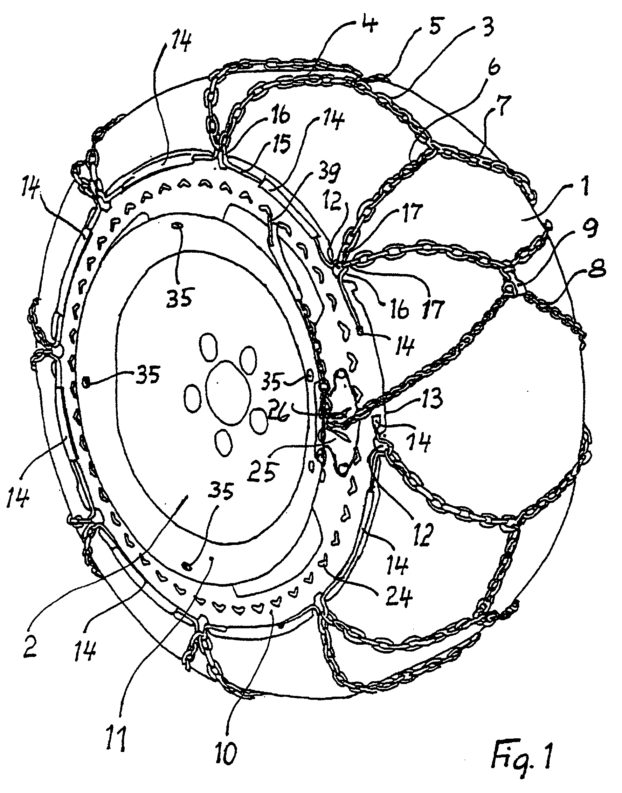

In Fig. 1 ist 1 ein Fahrzeugreifen, der auf eine Leichtmetallfelge 2 aufgezogen und mit einer Gleitschutzvorrichtung ausgestattet ist, deren Laufnetz im wesentlichen aus in Reifenumfangsrichtung aufeinanderfolgenden Spurkreuzen besteht, von denen ein jedes von einem Längskettenstrangstück 3 und vier Schrägkettenstrangstücken 4, 5, 6, 7 gebildet wird. Die Schrägkettenstrangstücke 5 und 7 sind in bekannter Weise mit einer nicht dargestellten inneren Halterung verbunden, die von einem Federstahlbügel gebildet wird, dessen Enden durch einen Spannstrang 8 miteinander verbunden sind, der über die Lauffläche des Reifens 1 zur äußeren Halterung der Gleitschutzvorrichtung geführt ist, wobei er eine Führungsöse 9 passiert.

Zur äußeren Halterung gehören eine im wesentlichen ringförmige Scheibe 10 und ein lösbar mit dieser verbundener Verwahrring 11. Beide vorgenannten Teile sind zweckmäßigerweise als Kunststoff-Spritzgußteile ausgebildet. In der Nähe ihres mit Aussparungen 12 versehenen äußeren Randes 13 weist die Scheibe 10 äquidistant zum äußeren Rand 13 verlaufende Haltevorsprünge 14 mit einem im wesentlichen L-förmigen Querschnitt auf. Die Haltevorsprünge 14 dienen zur Halterung eines Drahtbügels 15, der im Bereich der Aussparungen 12 gekröpfte Abschnitte aufweist, die Halteanker 16 für Anschlußorgane 17 formen, die im dargestellten Fall von senkrecht zur Flanke des Reifens 1 orientierten Endgliedern der Schrägkettenstrangstücke 4 und 6 gebildet werden.

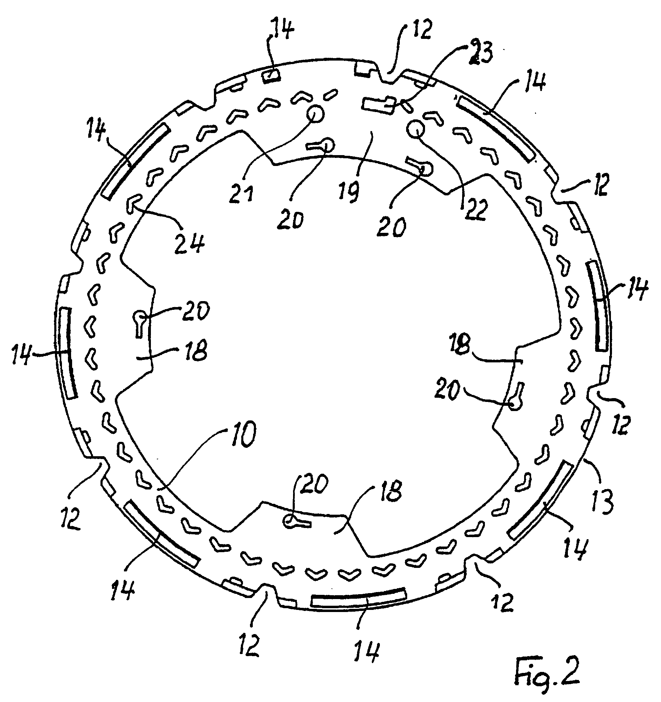

Die in Fig. 2 getrennt dargestellte Scheibe 10 weist zum Zentrum des von ihr gebildeten Ringes gerichtete, lappenartige Vorsprünge 18 und 19 auf, in deren Bereich schlüssellochförmige Ausnehmungen 20 angeordnet sind. Der Vorsprung 19 ist zusätzlich mit zwei kreisrunden Löchern 21, 22 und einer im wesentlichen L-förmigen Ausnehmung 23 versehen. Außerdem ist die Scheibe 10 mit V-förmigen Schlitzen 24 ausgestattet, deren Schenkel einen stumpfen Winkel einschließen und deren Spitzen nach außen gerichtet sind.

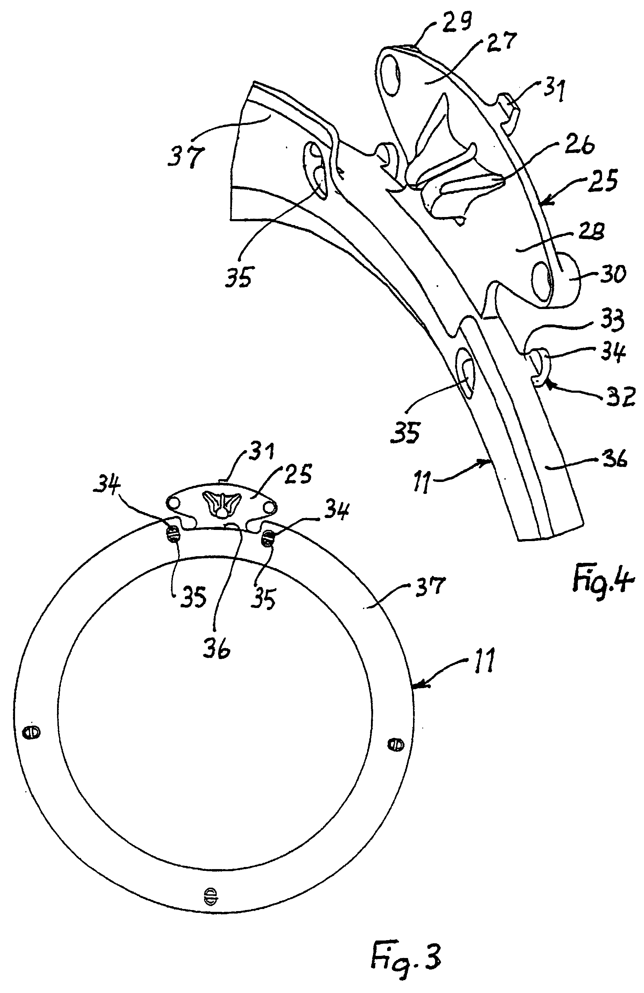

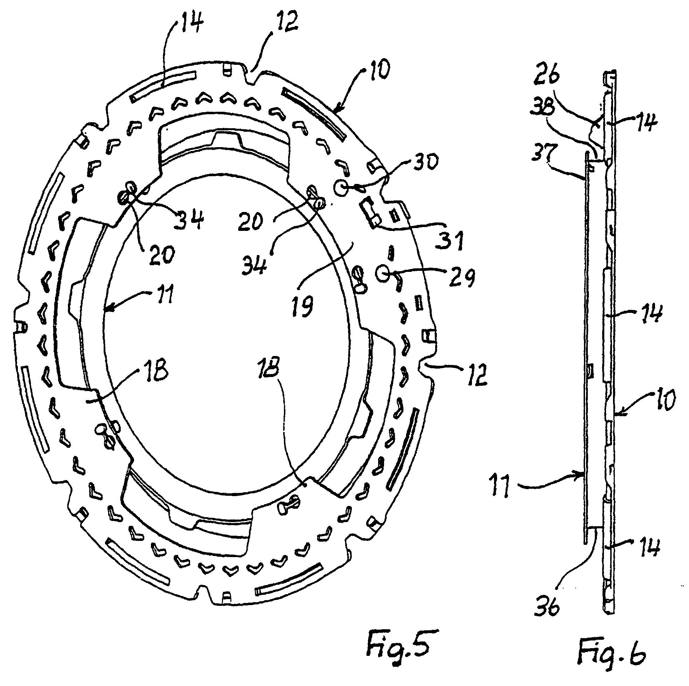

Fig. 3 zeigt die Frontansicht des von der Scheibe 10 getrennten Verwahrrings 11. Der Verwahrring 11 besitzt einen nach außen gerichteten Ansatz 25 mit einer gabelförmigen Rückhalteklaue 26, in die ein Glied des Spannstrangs 8 einhängbar ist. Einzelheiten des Aufbaus des Ansatzes 25 ergeben sich aus der Fig. 4.

Man erkennt in Fig. 4 zwei im Bereich von Auslegern 27, 28 angeordnete Rastnocken 29, 30, die federnd in die Löcher 21 und 22 der Scheibe 10 einrasten können. Außerdem ist der Ansatz 25 mit einem zu seiner Stabilisierung dienenden Riegel 31 versehen, dem die Ausnehmung 23 in der Scheibe 10 zugeordnet ist.

Über den Umfang des Verwahrrings 11 verteilt sind an dessen Rückseite fünf Vorsprünge 32 angeordnet, die jeweils aus einem Schaft 33 und einem Kopf 34 bestehen. Beim Zusammenfügen der Scheibe 10 und des Verwahrrings 11 werden die Vorsprünge 32 durch die Ausnehmungen 20 der Scheibe 10 gesteckt, und der Verwahrring 11 wird anschließend um einen geringen Betrag gegenüber der Scheibe 10 gedreht, um die Schäfte 33 der Vorsprünge 32 in die U-förmigen Abschnitte der Ausnehmungen 20, d.h. in eine Position zu überführen, in der die Köpfe 34 der Vorsprünge 32 die Scheibe 10 hintergreifen. Es ist dies die Position, in der gleichzeitig die Rastnocken 29, 30 in die Löcher 21 und 22 der Scheibe 10 einrasten. Aus spritztechnischen Gründen weist der Verwahrring 11 im Bereich der Vorsprünge 32 ovale Löcher 35 auf.

Die Fig. 5 und 6 zeigen den bajonettverschlußartig mit der Scheibe 10 verbundenen Verwahrring 11 schräg von hinten und von der Seite. Wie man insbesondere aus Fig. 6 erkennt, bildet der Verwahrring 11 den Boden 36 und eine Seitenwand 37 einer umlaufenden Nut 38, deren zweite Seitenwand die Scheibe 10 formt. Die Nut 38 dient zur Aufnahme des bei montierter Gleitschutzvorrichtung zu verwahrenden Endes des Spannstrangs 8. Das Spannstrangende wird gewissermaßen in die Nut 38 gewickelt und anschließend wird ein am äußersten Ende des Spannstrangs 8 angeordneter, einen elastischen Grundkörper aufweisender Verwahrhaken 39 in den jeweils nächstgelegenen Schlitz 24 eingehängt. Die V-förmige Ausbildung der Schlitze 24 erlaubt es dem Benutzer, den Verwahrhaken 39 in Abhängigkeit von der Wickelrichtung in den einen oder anderen Schlitzschenkel einzuhängen.

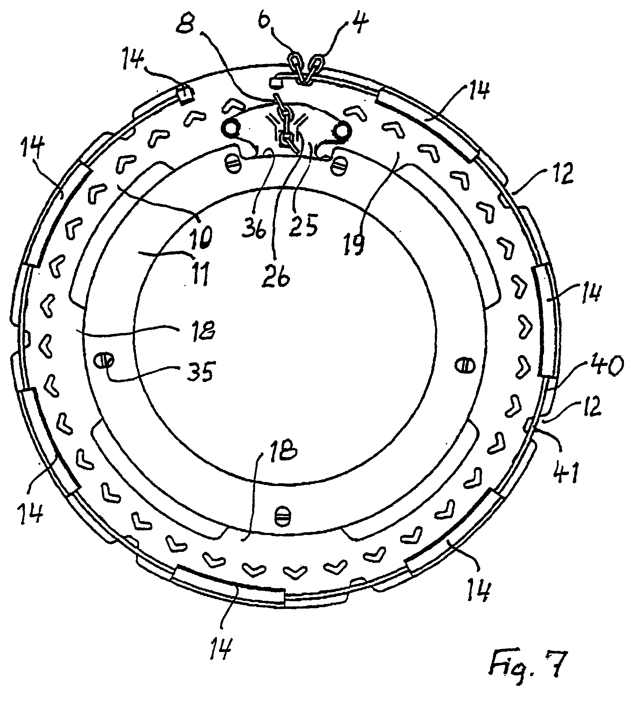

Fig. 7 zeigt eine leicht modifizierte Ausführungsform der äußeren Halterung, die sich von der bisherigen Lösung nur dadurch unterscheidet, daß der Drahtbügel 40 im Bereich der Ausnehmungen 20 nicht gekröpft ist. Die Halteanker 41 sind hier folglich im wesentlichen gerade ausgebildet. Durch die Verwendung unterschiedlicher Drahtbügel 15 bzw. 40 lassen sich mit dem gleichen Laufnetz und einer aus der gleichen Scheibe 10 sowie dem gleichen Verwahrring 11 bestehenden äußeren Halterung Gleitschutzvorrichtungen für unterschiedliche Felgen- und/oder Reifengrößen konfektionieren.

## Patentansprüche

1. Gleitschutzvorrichtung mit einem Laufnetz, das über Anschlußorgane (17) an mehreren Anschlußstellen mit einer inneren und einer äußeren Halterung verbunden ist, und mit einem zum Verkürzen des Umfangs der inneren Halterung (2) dienenden Spannstrang (8), der von der inneren Halterung (2) zur äußeren Halterung verläuft, **dadurch gekennzeichnet, daß** letztere eine Scheibe (10) und einen Verwahrring (11) für das Ende des Spannstrangs (8) aufweist und daß der Verwahrring (11) lösbar mit der Scheibe (10) verbunden ist.

2. Gleitschutzvorrichtung nach Anspruch 1, **dadurch gekennzeichnet, daß** der Verwahrring (11) den Boden (36) sowie die eine Seitenwand (37) und die Scheibe (10) die andere Seitenwand einer umlaufenden Nut (38) zur Aufnahme des zu verwahrenden Endes des Spannstrangs (8) bilden.

3. Gleitschutzvorrichtung nach Anspruch 2, **dadurch gekennzeichnet, daß** die vom Verwahrring (11) gebildete Seitenwand (37) sich über dessen Boden (36) hinaus leicht schalenförmig bis zur die zweite Seitenwand bildenden Scheibe (10) nach innen erstreckt.

4. Gleitschutzvorrichtung nach einem oder mehreren der Ansprüche 1 bis 3, **dadurch gekennzeichnet, daß** der Verwahrring (11) mit jeweils einen Schaft (33) und einen Kopf (34) aufweisenden Vorsprüngen (32) versehen ist und daß den Vorsprüngen (32) schlüssellochförmige Ausnehmungen (20) in der Scheibe (10) zugeordnet sind, die einen an den Querschnitt des Kopfes (34) des Vorsprungs (32) angepaßten runden Abschnitt und einen an den Querschnitt des Schaftes (33) des Vorsprungs (32) angepaßten, im wesentlichen U-förmigen Abschnitt aufweisen

5. Gleitschutzvorrichtung nach Anspruch 4, **dadurch gekennzeichnet, daß** der Verwahrring (11) mit federnd angeordneten Rastnocken (29, 30) versehen ist, die in Rastlöcher (21, 22) der Scheibe (10) einrasten, sobald die Schäfte (33) der Vorsprünge (32) in die U-förmigen Abschnitte der Ausnehmungen (20) überführt sind.

6. Gleitschutzvorrichtung nach einem oder mehreren der Ansprüche 1 bis 5, **dadurch gekennzeichnet, daß** der Verwahrring (11) einen nach außen gerichteten Ansatz (25) mit einer gabelartigen Rückhalteklaue (26) für den Spannstrang (8) aufweist.

7. Gleitschutzvorrichtung nach Anspruch 6, **dadurch gekennzeichnet, daß** die Rückseite des Ansatzes (25) im montierten Zustand gegen die jeweils äußere Seitenfläche der Scheibe (10) anliegt.

8. Gleitschutzvorrichtung nach Anspruch 6 oder 7, **dadurch gekennzeichnet, daß** der Ansatz (25) federnd ausgebildet ist.

9. Gleitschutzvorrichtung nach Anspruch 5 und einem oder mehreren der Ansprüche 6 bis 8, **dadurch gekennzeichnet, daß** die Rastnocken (29, 30) an seitlichen Auslegern des Ansatzes (25) angeordnet sind.

10. Gleitschutzvorrichtung nach einem oder mehreren der Ansprüche 1 bis 9, **dadurch gekennzeichnet, daß** die Scheibe (10) ringförmig ausgebildet ist.

11. Gleitschutzvorrichtung nach Anspruch 10, **dadurch gekennzeichnet, daß** die einen Ring bildende Scheibe (10) mit zum Zentrum des Ringes gerichteten lappenartigen Vorsprüngen (18, 19) versehen ist und die schlüssellochförmigen Ausnehmungen (20) im Bereich dieser Vorsprünge (18, 19) angeordnet sind.

12. Gleitschutzvorrichtung nach einem oder mehreren der Ansprüche 1 bis 11, **dadurch gekennzeichnet, daß** die Scheibe (10) mit Schlitzen (24) zum Einhängen eines am Ende des Spannstrangs (8) angeordneten Verwahrhakens (39) versehen ist.

13. Gleitschutzvorrichtung nach Anspruch 12, **dadurch gekennzeichnet, daß** die Schlitze (24) im wesentlichen die Form eines V haben, dessen Spitze nach außen gerichtet ist.

14. Gleitschutzvorrichtung nach einem der Ansprüche 1 bis 13, **dadurch gekennzeichnet, daß** die Scheibe (10) Halteanker (16) für die Anschlußorgane (17) aufweist.

15. Gleitschutzvorrichtung nach einem der Ansprüche 1 bis 14, **dadurch gekennzeichnet, daß** die Scheibe (10) im Bereich der Anschlußstellen für die Anschlußorgane (17) Aussparungen (12) aufweist.

16. Gleitschutzvorrichtung nach Anspruch 14 und 15, **dadurch gekennzeichnet, daß** die Halteanker (16) die Aussparungen (12) überbrücken und jeder Halteanker (16) im Bereich der von ihm jeweils überbrückten Aussparung von einem senkrecht zur Flanke des mit der Gleitschutzvorrichtung auszustattenden Reifens orientierten, als Kettenglied ausgebildeten Anschlußorgan (17) umfaßt wird.

17. Gleitschutzvorrichtung nach einem oder mehreren der Ansprüche 14 bis 16, **dadurch gekennzeichnet, daß** die Halteanker (41) im Bereich der Aussparungen (12) im wesentlichen gerade ausgebildet sind.

18. Gleitschutzvorrichtung nach einem oder mehreren der Ansprüche 14 bis 16, **dadurch gekennzeichnet, daß** die Halteanker (16) im Bereich der Aussparungen (12) gekröpft ausgebildet sind.

19. Gleitschutzvorrichtung nach einem oder mehreren der Ansprüche 14 bis 18, **dadurch gekennzeichnet, daß** die Halteanker (16, 41) von Abschnitten eines an der Scheibe (10) angeordneten Drahtbügels (15, 40) gebildet werden.

20. Gleitschutzvorrichtung nach einem oder mehreren der Ansprüche 1 bis 19, **dadurch gekennzeichnet, daß** die Scheibe (10) aus Kunststoff besteht.

21. Gleitschutzvorrichtung nach einem oder mehreren der Ansprüche 1 bis 20, **dadurch gekennzeichnet, daß** der Verwahrring (11) aus Kunststoff besteht.

## Claims

1. Anti-skid device having a running net which is connected to an inner and an outer fixing device at a plurality of connecting points by means of connecting elements (17), and having a tensioning chain (8) which serves to shorten the circumference of the inner fixing device (2) and runs from the inner fixing device (2) to the outer fixing device, **characterized in that** the latter has a disc (10) and a retainer ring (11) for the end of the tensioning chain (8), and **in that** the retainer ring (11) is detachably connected to the disc (10).

2. Anti-skid device according to Claim 1, **characterized in that** the retainer ring (11) forms the base (36) and one (37) of the side walls and the disc (10) forms the other side wall of a circumferential channel (38) for receiving the end of the tensioning chain (8) which is to be retained.

3. Anti-skid device according to Claim 2, **characterized in that** the side wall (37) which is formed by the retainer ring (11) extends inwards beyond its base (36) approximately in the shape of a bowl as far as the disc (10) which forms the second side wall.

4. Anti-skid device according to one or more of Claims 1 to 3, **characterized in that** the retainer ring (11) provided with projections (32) which each have a stem (33) and a head (34), and **in that** keyhole-shaped cut-outs (20) in the disc (10) are assigned to the projections (32) and have a round section which is matched to the cross section of the head (34) of the projection (32) and an essentially U-shaped section which is matched to the cross section of the stem (33) of the projection (32).

5. Anti-skid device according to Claim 4, **characterized in that** the retainer ring (11) is provided with latching cams (29, 30) which are arranged in sprung fashion and which latch into latching holes (21, 22) in the disc (10) as soon as the stems (33) of the projections (32) are moved into the U-shaped sections of the cut-outs (20).

6. Anti-skid device according to one or more of Claims 1 to 5, **characterized in that** the retainer ring (11) has an outwardly directed protrusion (25) with a fork-like retaining catch (26) for the tensioning chain (8).

7. Anti-skid device according to Claim 6, **characterized in that** the rear of the protrusion (25) bears in the assembled state against the respective outer side face of the disc (10).

8. Anti-skid device according to Claim 6 or 7, **characterized in that** the protrusion (25) is of sprung design.

9. Anti-skid device according to Claim 5 and one or more of Claims 6 to 8, **characterized in that** the latching cams (29, 30) are arranged on lateral shoulders of the protrusion (25).

10. Anti-skid device according to one or more of Claims 1 to 9, **characterized in that** the disc (10) is of annular design.

11. Anti-skid device according to Claim 10, **characterized in that** the disc (10) which forms a ring is provided with tab-like projections (18, 19) which are directed towards the centre of the ring, and the keyhole-shaped cut-outs (20) are arranged in the vicinity of these projections (18, 19).

12. Anti-skid device according to one or more of Claims 1 to 11, **characterized in that** the disc (10) is provided with slots (24) for the engagement of a retainer hook (39) which is arranged at the end of the tensioning chain (8).

13. Anti-skid device according to Claim 12, **characterized in that** the slots (24) are essentially in the shape of a V whose tip is directed outwards.

14. Anti-skid device according to one of Claims 1 to 13, **characterized in that** the disc (10) has fixing fittings (16) for the connecting elements (17).

15. Anti-skid device according to one of Claims 1 to 14, **characterized in that** the disc (10) has cut-outs (12) in the vicinity of the connecting points for the connecting elements (17).

16. Anti-skid device according to Claims 14 and 15, **characterized in that** the fixing fittings (16) span the cut-outs (12), and each fixing fitting (12) is surrounded in the vicinity of the cut-out which is respectively spanned by it by a connecting element (17) which is aligned perpendicularly with respect to the edge of the tyre which is to be equipped with the anti-skid device and is designed as a chain element.

17. Anti-skid device according to one or more of Claims 14 to 16, **characterized in that** the fixing fittings (41) are of essentially straight design in the vicinity of the cut-outs (12).

18. Anti-skid device according to one or more of Claims 14 to 16, **characterized in that** the fixing fittings (16) are bent at right angles in the vicinity of the cut-outs (12).

19. Anti-skid device according to one or more of Claims 14 to 18, **characterized in that** the fixing fittings (16, 41) are formed by sections of a wire strap (15, 40) which is arranged on the disc (10).

20. Anti-skid device according to one of more of Claims 1 to 19, **characterized in that** the disc (10) is composed of plastic.

21. Anti-skid device according to one or more of Claims 1 to 20, **characterized in that** the retainer ring (11) is composed of plastic.

## Revendications

1. Dispositif antidérapant avec un filet de roulement, qui est attaché à plusieurs points de raccordement par des organes de raccordement (17) avec une fixation intérieure et une fixation extérieure, et avec une corde de serrage (8) utilisée pour diminuer la portée de la fixation intérieure (2) allant de la fixation intérieure (2) à la fixation extérieure, **caractérisé en ce que** cette dernière présente un disque (10) et un anneau de maintien (11) pour l'extrémité de la corde de serrage (8) et **en ce que** l'anneau de maintien (11) est attaché au disque (10) de façon à pouvoir être détaché.

2. Dispositif antidérapant selon la revendication 1, **caractérisé en ce que** l'anneau de maintien (11) forme la base (36) ainsi qu'un panneau latéral (37) et le disque (10) forme l'autre panneau latéral d'une encoche faisant tout le tour (38) pour recevoir l'extrémité à maintenir de la corde de serrage (8).

3. Dispositif antidérapant selon la revendication 2, **caractérisé en ce que** le panneau latéral (37) formé par l'anneau de maintien (11) s'étend vers l'intérieur légèrement en forme de cuvette au-delà de la base (36) jusqu'au disque (10) formant le deuxième panneau latéral.

4. Dispositif antidérapant selon l'une quelconque des revendications 1 à 3, **caractérisé en ce que** l'anneau de maintien (11) est muni de parties saillantes (32) présentant respectivement une tige (33) et une tête (34) et **en ce que** des creux en forme de trou de serrure (20) dans le disque (10) sont affectés aux parties saillantes (32), creux qui présentent une section arrondie adaptée à la section transversale de la tête (34) de la partie saillante (32) et une section essentiellement en forme de U adaptée à la section transversale de la tige (33) de la partie saillante (32).

5. Dispositif antidérapant selon la revendication 4, **caractérisé en ce que** l'anneau de maintien (11) est muni d'ergots disposés sur ressort (29, 30) qui s'enclenchent dans les trous d'arrêt (21, 22) du disque (10) dès que les tiges (33) des parties saillantes (32) sont introduites dans les sections en forme de U des creux (20).

6. Dispositif antidérapant selon l'une quelconque des revendications 1 à 5, **caractérisé en ce que** l'anneau de maintien (11) présente un appendice (25) disposé vers l'extérieur avec une dent de retenue en forme de fourche (26) pour la corde de serrage (8).

7. Dispositif antidérapant selon la revendication 6, **caractérisé en ce que** la face arrière de l'appendice (25), à l'état assemblé s'applique sur la face latérale extérieure correspondante du disque (10).

8. Dispositif antidérapant selon la revendication 6 ou 7, **caractérisé en ce que** l'appendice (25) est agencé de manière élastique.

9. Dispositif antidérapant selon la revendication 5 et l'une quelconque des revendications 6 à 8, **caractérisé en ce que** les ergots (29, 30) sont disposés sur des saillies latérales de l'appendice (25).

10. Dispositif antidérapant selon l'une quelconque des revendications 1 à 9, **caractérisé en ce que** le disque (10) est en forme d'anneau.

11. Dispositif antidérapant selon la revendication 10, **caractérisé en ce que** le disque (10) formant un anneau est muni de parties saillantes (18, 19) en forme d'agrafe disposées au centre de l'anneau et les creux en forme de trou de serrure (20) sont affectés à la région de ces parties saillantes (18, 19).

12. Dispositif antidérapant selon l'une quelconque des revendications 1 à 11, **caractérisé en ce que** le disque (10) est muni d'encoches (24) pour fixer un crochet de maintien (39) disposé à l'extrémité de la corde de serrage (8).

13. Dispositif antidérapant selon la revendication 12, **caractérisé en ce que** les encoches (24) ont essentiellement la forme d'un V et leur pointe est orientée vers l'extérieur.

14. Dispositif antidérapant selon l'une quelconque des revendications 1 à 13, **caractérisé en ce que** le disque (10) présente des ancres de maintien (16) pour les organes de raccordement (17).

15. Dispositif antidérapant selon l'une quelconque des revendications 1 à 14, **caractérisé en ce que** le disque (10) présente des évidements (12) dans la région des points de raccordement pour les organes de raccordement (17).

16. Dispositif antidérapant selon les revendications 14 et 15, **caractérisé en ce que** les ancres de maintien (16) passent par-dessus les évidements (12) et chaque ancre de maintien (16) dans la région de chaque évidement passant au-dessus de lui est entouré d'un organe de raccordement (17) formé comme un maillon orienté à la verticale du flanc du pneu équipé du dispositif antidérapant.

17. Dispositif antidérapant selon l'une quelconque des revendications 14 à 16, **caractérisé en ce que** les ancres de maintien (41) sont formés essentiellement rectilignes dans la région des évidements (12).

18. Dispositif antidérapant selon l'une quelconque des revendications 14 à 16, **caractérisé en ce que** les ancres de maintien (16) sont coudés dans la région des évidements (12).

19. Dispositif antidérapant selon l'une quelconque des revendications 14 à 18, **caractérisé en ce que** les ancres de maintien (16, 41) sont formées de sections d'un arceau (15, 40) disposé sur le disque (10).

20. Dispositif antidérapant selon l'une quelconque des revendications 1 à 19, **caractérisé en ce que** le disque (10) est en plastique.

21. Dispositif antidérapant selon l'une quelconque des revendications 1 à 20, **caractérisé en ce que** l'anneau de maintien (11) est en plastique.
